# NEUE EUROPÄISCHE PATENTSCHRIFT

(11) **EP 0 335 010 B2**
(45) Veröffentlichungstag und Bekanntmachung des Hinweises auf die Entscheidung über den Einspruch: **05.03.1997**
(45) Hinweis auf die Patenterteilung: 06.04.1994
(21) Anmeldenummer: 88121702.0
(22) Anmeldetag: 27.12.1988
(51) Int. Cl.: G05B 19/12

(54) **Elektro-Schweissgerät zum selbsttätigen Schweissen von Heizwendel-Fittingen**
Electric welding device for automatically welding heating spiral fittings together
Appareil de soudure électrique pour auto-soudure d'un raccord à spirale chauffante

(30) Priorität: 30.03.1988 DE 3810795
(43) Veröffentlichungstag der Anmeldung: 04.10.1989
(73) Patentinhaber: HÜRNER GMBH, D-60489 Frankfurt (DE)
(72) Erfinder: Merle, Bernd, Dipl.-Ing., D-6320 Alsfeld-Eudorf (DE)
(74) Vertreter: Schubert, Siegmar, Dipl.-Ing.

(56) Entgegenhaltungen:
- EP-A- 0 076 043
- EP-A- 0 153 298
- DD-A- 1 822 997
- DE-A- 1 615 216
- DE-A- 1 790 161
- DE-A- 2 102 787
- DE-A- 3 545 158
- FR-A- 2 572 326
- US-A- 4 642 255
- Brochure of Fusamatic Fittings (1985)

## Beschreibung

Die Erfindung betrifft ein Elektro-Schweißgerät zum selbsttätigen Schweißen von Heizwendel-Fittingen im wesentlichen aus Kunststoff.

Zum Verbinden von Kunststoffrohren, insbesondere Gasleitungsrohren aus Kunststoff, dienen nach dem Stand der Technik häufig Fittinge, die ebenfalls im wesentlichen aus Kunststoff bestehen und die auf ihrer Innenfläche eine elektrische Spule aus leitendem Material aufweisen. Die Spule wird zum Verbinden der Rohrenden mittels des Fittings mit einem so großen Schweißstrom beaufschlagt, daß der Kunststoff im Fitting und auf den Rohrenden verschmelzen und anschließend aushärten kann. Die Kunststoffteile bestehen insbesondere aus Polyäthylen. - Ein Problem bei diesem Schweißverfahren, welches auch als Heiß-Siegelverfahren aufgefaßt werden kann, besteht in dem richtigen Schmelzgrad des Kunststoffs. Wenn dieser zu wenig schmilzt, tendiert die Verbindung der Rohrenden zu Undichtigkeiten. Andererseits kann ein zu starkes Schmelzen des Kunststoffs zu unerwünschten Verformungen fuhren und sogar den Fitting teilweise verbrennen. Erschwerend kommt hinzu, daß die Schweißung für verschiedene Rohrdurchmesser und Fittingdurchmesser zu optimieren ist und dabei die Materialeigenschaften verschiedener Kunststoffe zu berücksichtigen sind Auch der Innendruck, dem die verschweißten Rohre betriebsmäßig standhalten sollen, kann zur Einstellung eines optimalen Schweißfaktors berücksichtigt werden. Zu diesem Zweck wird auch die Umgebungstemperatur während des Schweißvorgangs in Rechnung gestellt.

Bei einem aus der Praxis bekannten Elektroschweißgerät wird in Abhängigkeit von den Daten des zu schweißenden Rohrs und von der Umgebungstemperatur die Schweißzeit vorgeben, die aus einer inkremental gebildeten Grundzeit von der Umgebungstemperatur variabel gebildet wird. Die Schweißspannung, welche den Schweißstrom durch die Spule des Fittings treibt, wird in Abhängigkeit von den Daten des Fittings, insbesondere dessen Durchmesser, vorgegeben und unabhängig von der Bildung der Schweißzeit konstant gehalten. Nachteilig ist dabei, daß die Spannung von Generatoren, welche den Schweißstrom erzeugen, verschiedene Kurvenformen aufweisen kann, welche von der idealen Sinusform abweicht. Die Regelung der Spannung beruht jedoch dabei auf einer Messung, die eine Sinusform bei einer bestimmten Frequenz voraussetzt. Daher kann ein solches Gerät auf eine für den optimalen Schweißfaktor nicht geeignete Spannung einregeln. Die Abschaltung der Spannung erfolgt dabei von dieser unabhängig zeitgesteuert. Die Abschaltung kann nicht ohne weiteres kontrollierbaren Fehlern unterworfen sein, da die die Zeitdauer bestimmenden Daten mit Tasten in das Elektroschweißgerät eingegeben werden. In dieser Weise erfolgt die Eingabe des Rohrinnendrucks, der Umgebungstemperatur sowie des Rohrdurchmessers. Es ist also bei diesem Elektroschweißgerät nachteilig, daß durch falsche Spannungsmessung und/oder falsche Eingabe mittels der Tasten die Gefahr besteht, daß die Schweißung nicht optimal durchgeführt wird, ohne hierüber eine unmittelbare Kontrolle zu erlauben.

Bei einem zum Stand der Technik gehörenden Elektro-Schweißgerät der eingangs genannten Gattung werden Eingabefehler weitgehend dadurch vermieden, daß das Elektro-Schweißgerät einen Abtaster für eine Kennkarte aufweist, die mit dem Heizwendel-Fitting verbunden ist und von dieser die von dem Elektroschweißgerät zu verarbeitenden Daten abtastet. Diese Daten können über einen Pulsformer und einen Dekodierer sowie einen Prüfschaltkreis für die abgelesenen Daten in einen Eingang eines Reglers eingegeben werden, welcher den Meßstrom regelt. Generell soll der Regler die Intensität und die Dauer des Heizvorgangs bzw. der Schweißung regeln. Mit dem Abtaster können von der Kennkarte beispielsweise in Form eines Strichcodes die in die Regelung eingehenden Parameter,wie Durchmesser des Heizwendel-Fittings, Wandstärke, elektrischer Widerstand des Heizwendels, Fittinglänge, Art des Kunststoffs, abgetastet werden. Außerdem wird mit einem Umgebungstemperaturfühler die Temperatur des Heizwendel-Fittings zu Beginn der Schweißung bestimmt und als elektrisches Signal in einen Eingang des Reglers eingespeist, in dem das Schweißprogramm entsprechend der gemessenen Temperatur geändert wird. Ausgänge des Reglers sind an eine Leistungsstufe angeschlossen, welche den Schweißstrom für den Heizwendel-Fitting erzeuge sowie an Überwachungsschaltkreise, die mit einer Anzeigeeinrichtung für Betriebsdaten in Verbindung stehen. Der Schweißstrom wird über eine Rückführschleife zu dem Regler zurückgeführt und auch in die Überwachungsschaltkreise eingespeist. Bei einer Störung des Schweißvorgangs erzeugen die Überwachungsschaltkreise Signale, die mit der Anzeigeeinrichtung angezeigt werden und mit einem Schalter den laufenden Betrieb stoppen (FR- A- 25 72 326). - Nachteilig kann bei diesem Elektro-Schweißgerät die Bildung und Veränderung des Schweißprogramms in dem Regler sein, in dem eine Fülle von einzelnen Parametern eingespeist sind, die zu dem Schweißprogramm zu verknüpfen sind, damit der Regler mit dem annähernd optimalen Schweißfaktor die Schweißleistung über den Schweißstrom und die Schweißzeitdauer regeln kann.

Bekannt ist ferner ein Verfahren zur Steuerung der elektrischen Arbeit bei Punktschweißmaschinen unter Berücksichtigung des Kontaktdruckes, wobei die Höhe der der Schweißung zugeführten elektrischen Arbeit mit zum Stand der Technik gehörenden Verfahren gemessen und gesteuert wird (DE-A-1 790 161). Insbesondere ist ein Hallgenerator vorgesehen, der eine zu integrierende Spannung abgibt, welche dem Produkt aus Schweißstrom und Schweißspannung proportional ist. Die integrierte Spannung wird mit einem Schweißdruck-abhängigen Schwellwert verglichen, um bei jedem Schweißdruck die Schweißung mit einer geeigneten Schweißarbeit durchzuführen. Der Schwellwert wird durch eine dem Schweißdruck proportionale Spannung dargestellt, die insbesondere mit einem Dehnungsmeßstreifen mit nachgeschaltetem Verstärker erzeugt wird.

Der Erfindung liegt daher die Aufgabe zugrunde, ein Elektro-Schweißgerät zum selbsttätigen Schweißen von Heizwendel-Fittings im wesentlichen aus Kunststoff zu schaffen, welches mit hoher Sicherheit eine ordnungsgemäße Schweißung mit annähernd optimalem Schweißfaktor ohne umständliche Bildung bzw. Veränderung eines Schweißprogramms erlaubt.

Diese Aufgabe wird durch die Ausbildung des Elektro-Schweißgerätes zum selbsttätigen Schweißen von Heizwendel-Fittings im wesentlichen aus Kunststoff mit den in dem Anspruch 1 angegebenen Merkmalen gelöst.

Das Lösungsprinzip besteht darin, daß mit dem Elektro-Schweißgerät die für den optimalen Schweißfaktor maßgebende Größe, nämlich die Soll-Schweißarbeit, direkt durch Abtastung eingespeist wird und daß in dem Regler diese Soll-Schweißarbeit mit der jeweils aktuellen Ist-Schweißarbeit verglichen wird, so daß die Schweißarbeit beendet wird, wenn die Ist-Schweißarbeit die Soll-Schweißarbeit erreicht hat. Durch die Abtastung insbesondere eines Strichcodes, welcher die Soll-Schweißarbeit-Daten umfaßt, können Irrtümer bei der Eingabe praktisch nicht auftreten. Die Ist-Schweißarbeit kann mit technisch umkomplizierten Mitteln nach Anspruch 3 erfaßt werden, wonach mindestens ein integrierter Schaltkreis als Effektivwertmesser der Schweißspannung und des Schweißstroms mit einem die Schweißleistung bildenden Rechner in Verbindung steht. In dem Rechner brauchen die genannten Effektivwerte lediglich multiplikativ verknüpft zu werden. Weiterhin ist zur Überwachung der Grenzen der Schweißzeit eine Schweißzeitüberwachungseinrichtung vorgesehen, welche die von dem Fitting abgetasteten Grenzdaten zulässiger Schweißzeiten aufnimmt, die Grenzen zulässiger Schweißzeiten mit der Ist-Schweißzeit vergleicht und bei Über- bzw. Unterschreiten der zulässigen Schweißzeiten eine Sperreinrichtung zum Stoppen des Schweißstromes und/oder eine Meldeeinrichtung auslöst.

Zur noch besseren Annäherung an den optimalen Schweißfaktor und Erhalt der Vorteile der sicheren Datenerfassung in dem Elektro-Schweißgerät und der unkomplizierten Regelung zeichnet sich das Schweißgerät nach Anspruch 2 aus durch einen Umgebungstemperaturfühler sowie einen Rechner, der von dem Abtaster über den Umsetzer mit normierten Soll-Schweißarbeit-Daten des Fittings beaufschlagt wird und Signale einer Temperatur-korrigierten Soll-Schweißarbeit in den weiteren Eingang des Reglers einspeist. - Es wird also durch den Umgebungstemperaturfühler die normierte, d.h. auf eine bestimmte Referenztemperatur bezogene Soll-Schweißarbeit in Abhängigkeit von der aktuellen Umgebungstemperatur korrigiert. Im übrigen läuft die Regelung der Schweißleistung über den Schweißstrom sowie der Schweißzeitdauer ebenso einfach wie nach dem eingangs erläuterten Prinzip ab.

Während die Soll-Schweißarbeit ein primär die Regelung der Schweißleistung bestimmender Parameter ist, werden weitere Parameter sekundär zur Sicherung der ordnungsgemäßen Schweißung auch unter ungünstigen Bedingungen erfaßt und ausgewertet, um den Schweißvorgang zu sperren bzw. zu stoppen, wenn bestimmte Grenzwerte überschritten werden. Zusätzlich erfolgt eine selbsttätige Fixierung dieser Abweichungen bzw. Störungen in Form eines Protokolls.

Nach Anspruch 4 ist das Elektro-Schweißgerät so ausgebildet, daß der Schweißvorgang erst beginnt, wenn der angeschlossene Heizwendel-Fitting tatsächlich einen Widerstandswert des Heizwendels aufweist, welcher mit einem vorgegebenen Wert praktisch übereinstimmt. Hierzu ist vorgesehen, daß der Abtaster für die Fittingdaten über den Umsetzer Daten des auf eine Bezugstemperatur von insbesondere 20° C bezogenen Sollwiderstands des Fittings sowie einen Temperaturfaktor des Widerstands erfaßt und in einen Speicher einspeichert, daß eine mit dem Umgebungstemperaturfühler verbundene Korrektur- und Vergleichseinrichtung mit dem Speicher sowie mit einem an den Fitting angeschlossenen Widerstandsmeßkreis in Verbindung steht, den damit gemessenen Istwiderstand mit dem auf die Umgebungstemperatur umgerechneten Sollwiderstand vergleicht und bei Abweichung über einer Toleranz die Sperreinrichtung auslöst. - Damit kann der Schweißvorgang erst beginnen, wenn verifiziert wurde, daß der Heizwendel-Fitting in Ordnung ist, d.h. den vorgesehenen Widerstandswert aufweist, jedoch keinen Kurzschluß oder Unterbrechung hat.

Weiterhin sind zur Überwachung der Schweißspannung nach Anspruch 5 strukturelle Maßnahmen voegesehen, mit welchen Grenzwerte der Schweißspannung von dem Fitting mit dem Abtaster abgetastet und in einer Spannungsüberwachungseinrichtung mit den entsprechenden Istwerten verglichen werden. Fest vorgegebene Grenzwerte der Eingangsspannung und deren Frequenz werden hingegen fest in dem Gerät gespeichert und mit den darin erfaßten Istwerten verglichen. Wenn einer der Istwerte den zugehörigen unteren Grenzwert unterschreitet oder den oberen Grenzwert überschreitet, wird eine Sperreinrichtung ausgelöst, welche den Schweißvorgang stoppt. Außerdem können mit der Meldeeinrichtung eine Meldung und mit einem protokollierenden Drucker ein Ausdruck erfolgen.

Die Erfindung wird im folgenden anhand einer Zeichnung mit einer Figur erläutert, in der ein schematisiertes Blockschaldbild des Elektro-Schweißgerätes dargestellt ist.

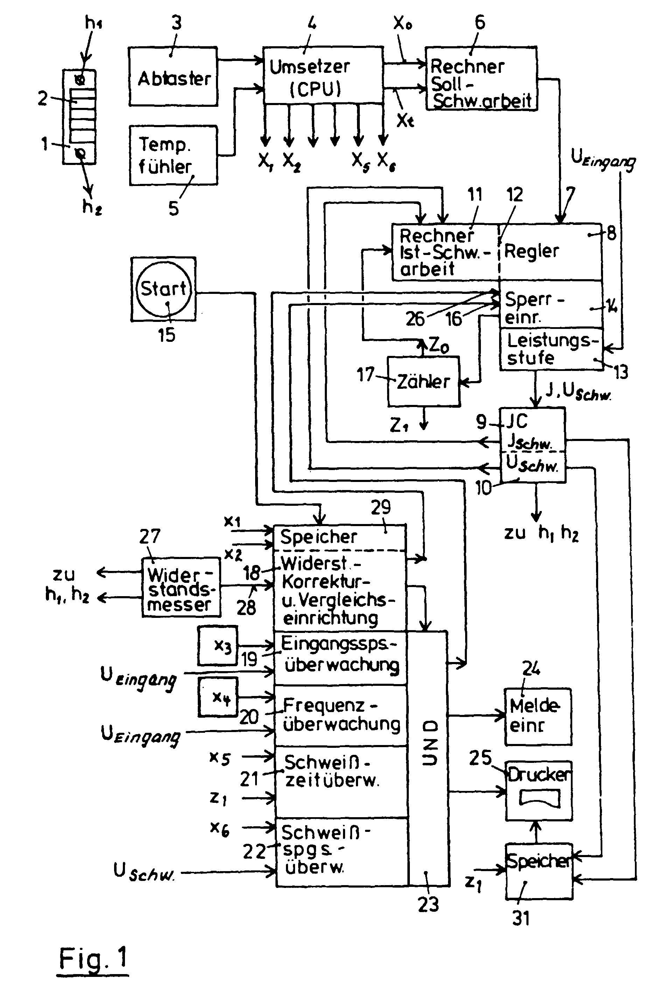

In Fig. 1 ist ein zum Verschweißen mit Kunststoffrohren vorgesehener Heizwendel-Fitting mit 1 bezeichnet. Er weist mit seinem Heizwendel verbundene Anschlüsse h1 und h2 auf. Auf seiner Außenseite ist ein Etikett 2 mit Daten in Form eines Strichcodes aufgebracht.

Die Daten können von einem zu dem Elektro-Schweißgerät gehörenden Abtaster 3 abgegriffen werden, der insbesondere als Lichtgriffel ausgebildet sein kann. Ein Ausgang des Abtasters ist an einen Umsetzer 4 angeschlossen, welcher die abgetasteten Daten zur Weiterverarbeitung umsetzt und dekodiert. Ausgänge des Umsetzers sind mit X0 bis X6 bezeichnet. Jeder dieser Ausgänge ist bestimmten Daten durch die interne Organisation des Umsetzers zugeordnet. Der Umsetzer kann insbesondere durch eine kleine Zentralrechnereinheit verwirklicht sein. Ein weiterer Eingang des Umsetzers ist mit einem Temperaturfühler 5 verbunden, der die jeweilige Umgebungstemperatur erfaßt.

Mit dem Abtaster 3 wird von dem Strichcode des Etiketts insbesondere eine normierte Soll-Schweißarbeit für den betreffenden Fitting abgestastet, der von dem Ausgang X0 des Umsetzers 4 in einen Rechner 6 zur Bildung einer Temperaturkorrigierten Soll-Schweißarbeit eingespeist wird. Hierzu wird mit dem Temperaturfühler die Umgebungstemperatur des Fittings erfaßt und über den Umsetzer 4 ebenfalls in den Rechner 6 über die Leitung Xₜ eingespeist. Signale entsprechend der Temperatur-korrigierten Soll-Schweißarbeit werden in einen ersten Eingang 7 als Sollwerteingang eines Reglers 8 eingespeist, der die Schweißleistung für eine Schweißdauer steuert und damit die Ist-Schweißarbeit einregelt. Die Regelung erfolgt im einzelnen durch Kontrolle des Effektivwerts des Schweißstroms bei gleichzeitiger Kontrolle durch Rückführung des Schweißstroms und der Schweißspannung. Die Effektivwerte des Schweißstroms und der Schweißspannung, die mit integrierten Schaltkreisen 9, 10 gebildet werden, werden dazu in den mit einem Rechner 11 zur Errechnung der Ist-Schweißarbeit verbundenen Regler 8 eingespeist. Weitere Eingänge des Reglers befinden sich an einer Schnittstelle 12 zwischen dem Rechner 11 und dem Regler 8.

Es sei an dieser Stelle bemerkt, daß der Rechner 6 für die Soll-Schweißarbeit, der Rechner 11 für die Ist-Schweißarbeit sowie der Regler 8 und weitere Funktionsgruppen, die noch weiter unten erläutert werden, durch eine Mikroprozessoreinheit mit internen Speichern (EPROM und RAM) sowie einer Ablaufsteuerung realisiert sein können.

Zurückkommend auf Fig. 1 steht ein nicht im einzelnen dargestellter Ausgang des Reglers 8 mit einer Leistungsstufe 13 in Verbindung, die den von dem Regler vorgegebenen Schweißstrom I_{Schw} sowie die Schweißspannung U_{Schw} abgibt. Die Leistungsstufe wird hierzu mit einer Eingangsspannung beaufschlagt, die nur als Teil der gesamten Stromversorgung in der Zeichnung angedeutet ist. Der Regler 8 und die Leistungsstufe 13 stehen noch mit einer Sperreinrichtung 14 in Verbindung, welche bei Betätigung eines Startknopfes 15 den Schweißstrom initiiert, bis ein den Schweißstrom abschaltendes Signal von dem Regler 8 oder ein anderes sperrendes Signal über einen Sperreingang 16 in die Sperreinrichtung gelangt.

Zu dem Elektro-Schweißgerät gehört weiter ein von einem nicht dargestellten Taktgenerator gespeister Zähler 17, der die Schweißzeit hochzählt, solange ein Schweißstrom von der Leistungsstufe 13 abgegeben wird und der den Zählvorgang beendet, wenn der Schweißstrom durch die Sperreinrichtung 14 gestoppt wird. Ausgänge des Zählers sind mit Z0 und Z1 bezeichnet. Von dem Ausgang Z0 wird ein Schweißzeitsignal in den Rechner 11 eingespeist. Der Ausgang Z1 stellt ein gleiches Schweißzeitsignal für einen weiter unten besprochenen Überwachungsvorgang zur Verfügung, während die oben besprochene Struktur im wesentlichen zur primären Erfassung der Soll-Schweißarbeit und der auf dieser beruhenden Regelung der Ist-Schweißarbeit dient.

Zur sekundären Überwachung verschiedener Größen, die für eine sichere Durchführung des Schweißvorgangs von Bedeutung sein können, sind eine Widerstandskorrektur-und Vergleichseinrichtung 18 sowie Überwachungseinrichtungen 19 - 22 für die Eingangsspannung, die Frequenz, die Schweißzeit und die Schweißspannung vorgesehen. Die Ausgänge dieser Überwachungseinrichtungen sind - über ein UND-Glied 23 - zusammengeführt an eine Meldeeinrichtung 24, die durch einen Summer realisiert werden kann, einen protokollierenden Drucker 25 sowie an die Sperreinrichtung 14 über den Sperreingang 16 angeschlossen.

Mit der Widerstandskorrektur- und Vergleichseinrichtung 18 wird kontrolliert, ob der von dem Etikett 2 abgestastete Wert des Widerstands des Heizwendel-Fittings mit dem tatsächlichen Widerstandswert übereinstimmt, da bei größeren Abweichungen mit keiner zuverlässigen Schweißung mehr gerechnet werden kann, obwohl von dem Regler die Ist-Schweißarbeit gleich der abgetasteten und Umgebungstemperaturkorrigierten Soll-Schweißarbeit eingeregelt wird. Zur Überprüfung des Widerstands ist ein Widerstandsmeßkreis 27 an die Anschlüsse h1 und h2 des Heizwendels angeschlossen. Der damit erfaßte Istwert des Widerstands wird in die Widerstandskorrektur- und Vergleichseinrichtung 18 über einen Eingang 28 eingespeist. Die Widerstandskorrektur- und Vergleicheinrichtung 18 steht weiter mit einem Speicher 29 intern in Verbindung, in welchen aus dem Umsetzer 4 von dem Etikett erfaßte Daten des auf eine Bezugstemperatur bezogenen Sollwiderstands des Fittings sowie ein Temperaturfaktor des Widerstands eingelesen werden. Mit dem Temperaturfaktor wird der Widerstandswert, der mit der Widerstandsmeßeinrichtung 27 erfaßt wurde, in der Widerstandskorrektur- und Vergleichseinrichtung 18 korrigiert, so daß der auf die Bezugstemperatur bezogene Istwiderstand mit dem auf die gleiche Bezugstemperatur von beispielsweise 20° C bezogene Sollwiderstand verglichen werden kann, Wenn das Vergleichsergebnis innerhalb von Grenzwerten liegt, die auch als Toleranzwerte bezeichnet sind, wird der Schweißvorgang über einen Freigabeeingang 30 der Sperreinrichtung 14 freigegeben. Im umgekehrten Falle, wenn der erfaßte umgerechnete Istwiderstand nicht zutrifft, erfolgt eine Sperrung über das UND-Glied 23 und den Sperreingang 16 der Sperreinrichtung 14.

Weiterhin ist eine Überwachung der Eingangsspannung, die in einen Eingang der Eingangsspannungsüberwachungseinrichtung 19 eingespeist wird, durch Vergleich mit fest vorgegebenen Grenzwerten der Eingangsspannung vorgesehen, die von einem Speicher X3 als Daten in die Eingangsspannungsüberwachungseinrichtung 19 eingegeben werden. Die Eingangsspannung wird außerdem auf ihre Frequenz in grundsätzlich gleicher Weise mit der Frequenzüberwachungseinrichtung 20 überwacht. Hierzu werden die in einem Speicher X4 eingespeicherten Grenzwerte der Frequenz in einen zugehörigen Eingang der Frequenzüberwachungseinrichtung eingespeist. Die Eingangsspannungsüberwachungseinrichtung 19 kann im Unterschied zu einer Schweißspannungsüberwachungseinrichtung 22 als Spannungsspitzenwertüberwachungseinrichtung ausgebildet sein. - Die Schweißspannungsüberwachungseinrichtung 22 erhält an einem Eingang den Effektivwert der Schweißspannung U_{Schw} und an einem weiteren Eingang die von dem Etikett 2 abgetasteten zugehörigen Grenzwerte der Schweißspannung, die an dem Ausgang X6 des Umsetzers 4 anstehen. Mit der Schweißzeitüberwachungseinrichtung 21 wird die Ist-Schweißzeit, die mit dem Zähler 17 ausgezählt wird und an dessen Ausgang Z1 ansteht, mit Grenzwerten der Schweißzeit verglichen, welche von einem Ausgang X5 des Umsetzers 4 in die Schweißzeitüberwachungseinrichtung eingeleitet werden. Durch den Vergleich der Ist-Schweißzeit mit den Grenzwerten der Soll-Schweißzeit kann zusätzlich überprüft werden, ob Fehler wie Heizwendel-Kurzschluß oder mangelhafte elektrische Kontaktierung des Heizwendels bei der Schweißung vorlagen. Hierdurch und durch die Überwachung der anderen genannten Paramteter mit der Eingangsspannungsüberwachungseinrichtung 19, der Frequenzüberwachungseinrichtung 20 und der Schweißspannungsüberwachungseinrichtung 22 kann ein bestmögliches Schweißergebnis gewährleistet werden.

Mit dem Drucker 25 werden nicht nur die Grenzwerte überschreitende Abweichungen der überwachten Betriebsparameter wie der Eingangsspannung und der Schweißspannung, der Frequenz der Eingangsspannung sowie der Schweißzeitdauer protokolliert, so daß eine Manipulation der Schweißung durch Nachschweißung aus dem ausgedruckten Protokoll entnommen werden kann, sondern auch die normalen Funktionen des Elektro-Schweißgeräts. Hierzu werden unter anderem die Schweißspannung und der Schweißstrom sowie die Schweißzeitdauer in einem nicht flüchtigen Speicher 31 zwischengespeichert. Der Speicher 31 gibt die zwischengespeicherten Werte bei Ausdruck des Protokolls mit dem Drucker 25 and en Drucker ab, wobei der Ausdruck in beliebig vorgegebenen Zeitabständen, z.B. täglich, erfolgen kann, da den ausgedruckten Werten zusätzlich eine Kennummer sowie das Datum und die Uhrzeit jedes Schweißvorgangs mit nicht dargestellten Mitteln zugeordnet wird.

Durch eine im einzelnen nicht dargestellte Ablaufsteuerung werden zunächst mit dem Abtaster 3 die in dem Strichcode des Etiketts 2 gespeicherten Daten abgetastet und umgesetzt, wonach diese Daten auf einer nicht dargestellten Anzeigevorrichtung, aber auch bei entsprechender Steuerung durch den Drucker 25 angezeigt werden können. Zugleicht mißt das Elektro-Schweißgerät mit dem Temperaturfühler 5 die Umgebungstemperatur und errechnet aus dem gleichzeitig mit dem Widerstandsmeßkreis 27 gemessenen aktuellen Widerstand des Heizwendels den auf eine Bezugstemperatur bezogenen Istwert, der mit einem Widerstandssollwert verglichen werden kann. Außerdem wird mit dem Rechner 6 die auf die Umgebungstemperatur bezogene Soll-Schweißarbeit errechnet, die auf der abgetasteten Soll-Schweißarbeit für eine bestimmte Umgebungstemperatur beruht. Auch die zulässigen Grenzen der Schweißzeit werden abgetastet, erforderlichenfalls mit der Umgebungstemperatur korrigiert, wozu ebenfalls der Rechner 6 dienen kann, und in einen Eingang der Schweißzeitüberwchungseinrichtung 21 eingespeist. Dieser Eingang ist hier als zu dem Ausgang X5 des Umsetzers 4 gehörend angedeutet.

Nach Betätigung der Starttaste 15 werden der eingelesene korrigierte Widerstandswert mit dem Widerstandssollwert in der Widerstandskorrektur- und Vergleichseinrichtung 18 verglichen, und es erfolgt bei Identität innerhalb vorgegebener Grenzwerte die Auslösung des Schweißvorgangs über den Freigabeeingang 26 der Sperreinrichtung 14. Während der Schweißung regelt der Regler 8 den Schweißstrom I_{Schw} sowie die Schweißspannung U_{Schw} und damit die Schweißleistung unter Berücksichtigung der von dem Zähler 17 gezählten Schweißzeit der Schweißarbeit. Wenn die Ist-Schweißarbeit die in den Eingang 7 eingespeiste Soll-Schweißarbeit erreicht, schaltet der Regler über die Sperreinrichtung 14 die Leistungsstufe 13 ab. Während der Schweißung werden die in die Überwachungseinrichtungen 19 - 22 eingegebenen Istwerte ständig überwacht. Bei Abweichung eines dieser Werte von den vorgegebenen Grenzwerten erfolgt die Abschaltung des Schweißvorgangs über die Sperreinrichtung 14 mit Klartextmeldung und Angabe der Uhrzeit und des Datums. Durch die regelmäßigen Ausdrucke der Klartextmeldungen mit dem Drucker 25 wird die Sicherheit der Schweißungen insgesamt kontrollierbar.

## Patentansprüche

1. Elektro-Schweißgerät zum selbsttätigen Schweißen von Heizwendel-Fittingen im wesentlichen aus Kunststoff, mit einem Abtaster (3) und einem Umsetzer (4) für Fittingdaten, der mit einem Eingang eines Reglers (8) in Verbindung steht, bei dem der Abtaster (3) über den Umsetzer (4) zur Eingabe von mit dem Abtaster (3) abgetasteten Soll-Schweißarbeit-Daten des Fittings (1) in den Regler (8) zum Vergleich mit Signalen der Ist-Schweißarbeit sowie von mit dem Abtaster (3) abgetasteten Grenzdaten zulässiger Schweißzeiten des Fittings in eine Schweißzeitüberwachungseinrichtung (21) eingerichtet ist, wobei wenigstens ein weiterer Eingang (bei 12) des Reglers (8) mit Schaltkreisen (Rechner 11) verbunden ist, welche Signale der Ist-Schweißarbeit aus der erfaßten Schweißleistung sowie aus der Ist-Schweißzeit generieren, und bei dem die Schweißzeitüberwachungseinrichtung (21), welche die Grenzdaten zulässiger Schweißzeiten aufnimmt, die Grenzen zulässiger Schweißzeiten mit der Ist-Schweißzeit vergleicht und bei Über- bzw. Unterschreiten der zulässigen Schweißzeiten eine Sperreinrichtung (14) zum Stoppen des Schweißstromes und/oder eine Meldeeinrichtung (24) auslöst.

2. Elektro-Schweißgerät nach Anspruch 1,
**gekennzeichnet durch**
einen Umgebungstemperaturfühler (5) sowie einen Rechner (6), der von dem Abtaster über den Umsetzer mit normierten Soll-Schweißarbeit-Daten des Fittings (1) beaufschlagt wird und Signale einer Temperatur-korrigierten Soll-Schweißarbeit in den Eingang (7) des Reglers (8) einspeist.

3. Elektro-Schweißgerät nach Anspruch 1,
**dadurch gekennzeichnet,**
daß mindestens einer der integrierten Schaltkreise (9, 10) als Effektivwertmesser der Schweißspannung und des Schweißstroms mit dem die Schweißleistung bildenden Rechner (11) in Verbindung steht.

4. Elektro-Schweißgerät nach einem der Ansprüche 1-3,
**dadurch gekennzeichnet,**
daß der Abtaster (3) für die Fittingdaten über den Umsetzer (4) Daten des auf eine Bezugstemperatur bezogenen Sollwiderstands des Fittings (1) sowie einen Temperaturfaktor des Widerstands erfaßt und in einen Speicher (29) einspeichert, daß eine mit dem Umgebungstemperaturfühler (5) in Verbindung stehende Korrektur- und Vergleichseinrichtung (18) mit dem Speicher sowie mit einem an den Fitting (1) angeschlossenen Widerstandsmeßkreis (27) in Verbindung steht, den damit gemessenen Istwiderstand mit dem auf die Umgebungstemperatur umgerechneten Sollwiderstand vergleicht und bei Abweichung außerhalb Grenzwerten die Sperreinrichtung (14) auslöst.

5. Elektro-Schweißgerät nach Anspruch 1,
**dadurch gekennzeichnet,**
daß die Fittingdaten Grenzen der Schweißspannung enthalten und daß eine Spannungsüberwachungseinrichtung (22) vorgesehen ist, welche die Grenzen der Schweißspannung und die Ist-Schweißspannung vergleicht und die Sperreinrichtung (14) bei Über- bzw. Unterschreiten der Grenzen auslöst.

6. Elektro-Schweißgerät nach Anspruch 1 oder 5,
**dadurch gekennzeichnet,**
daß Speicher (X₃, X₄) für Grenzdaten der Eingangsspannung sowie deren Frequenz an eine Eingangsspannungsüberwachungseinrichtung (19) bzw. eine Frequenzüberwachungseinrichtung (20) angeschlossen sind, welche die Grenzdaten mit Istdaten der Eingangsspannung und deren Frequenz vergleichen und bei Über- bzw. Unterschreiten der Grenzdaten die Sperreinrichtung (14) auslösen.

7. Elektro-Schweißgerät nach einem der Ansprüche 1, 2, 4, 5,
**dadurch gekennzeichnet,**
daß der Abtaster (3) mit dem Umsetzer (4) einer Bauart ist, welche auf dem Fitting in Form eines Strichcode aufgebrachte Daten abtastet.

## Claims

1. Electric welding device for automatically welding heating spiral fittings together made substantially of plastic with a scanner (3) and a converter (4) for fitting data which is connected to an input of a controller (8) on which the scanner (3) is arranged via the converter (4) for inputting desired welding operation data of the fitting (1) which has been scanned with the scanner (3) into the controller (8) for comparison with signals of the actual welding operation and limiting data of permissible welding times of the fitting which has been scanned with the scanner (3) into a welding time monitoring device (21) so that at least one further input (at 12) of the controller (8) is connected to switching circuits (computer 11) which generate signals of the actual welding operation from the detected welding capacity and from the actual welding time and on which the welding time monitoring device (21), which picks up the limiting data of permissible welding times, compares the limits of permissible welding times with the actual welding time and when the permissible welding times are exceeded or not reached triggers a blocking device (14) for stopping the welding current and/or an indicating device (24).

2. Electric welding device according to claim 1, characterized by an ambient temperature sensor (5) and a computer (6) which is triggered by the scanner via the converter with standardized desired welding operation data of the fitting (1) and feeds signals of a temperature-corrected desired welding operation into the input (7) of the controller (8).

3. Electric welding device according to claim 1, characterized in that at least one of the integrated switching circuits (9,10) is connected to the computer (11) which forms the welding capacity as an effective value measururing device of the welding voltage and the welding current.

4. Electric welding device according to one of claims 1-3, characterized in that the scanner (3) for the fitting data detects data of the desired resistance of the fitting (1) related to a reference temperature as well as a temperature factor of the resistance via the converter (4) and reads it into a store (29) and in that a correction and comparison device (18) which is connected to the ambient temperature sensor (5) is connected to the store as well as to a resistance measuring circuit (27) connected to the fitting (1), compares the actual resistance measured with this with the desired resistance converted to the ambient temperature and with a deviation outside limit values triggers the blocking device (14).

5. Electric welding device according to claim 1, characterized in that the fitting data contains limits of the welding voltage and in that a voltage monitoring device (22) is provided, which compares the limits of the welding voltage and the actual welding voltage and triggers the blocking device (14) when the limits are exceeded or not reached.

6. Electric welding device according to claim 1 or 5, characterized in that stores (X₃, X₄ ) for limiting data of the input voltage and its frequency are connected to an input voltage monitoring device (19) or a frequency monitoring device (20) which compare the limiting data with actual data of the input voltage and its frequency and which trigger the blocking device (14) when the limiting data is exceeded or not reached.

7. Electric welding device according to one of claims 1, 2, 4, 5, characterized in that the scanner (3) forms a structure with the converter (4) which scans data applied on the fitting in the form of a bar code.

## Revendications

1. Appareil de soudage électrique, pour le soudage automatique de raccords à spirale chauffante, essentiellement en matière synthétique, avec un détecteur (3) et un convertisseur (4) de données de raccord, relié à une entrée d'un régulateur (8), dans lequel le détecteur (3) est agencé en passant par le convertisseur (4) pour introduire dans le régulateur (8) des données de consigne détectées au moyen du détecteur (3), d'un travail de soudage du raccord (1), en vue de les comparer avec des signaux du travail réel de soudage, ainsi que des données limites de temps de soudage admissibles, détectées au moyen du détecteur (3), du raccord dans un dispositif de surveillance de temps de soudage (21), au moins une entrée supplémentaire (en 12) du régulateur (8) étant reliée à des circuits de commutation (calculateur 11), les signaux du travail réel de soudage étant générés à partir de la puissance de soudage saisie, ainsi qu'à partir du temps réel de soudage, et dans lequel le dispositif de surveillance de temps de soudage (21) qui reçoit les données limites des temps de soudage admissibles, effectue une comparaison entre les temps de soudage admissibles et le temps réel de soudage et déclenche en cas de franchissement en montée ou en descente des temps de soudage admissibles un dispositif de blocage (14) destiné à couper le courant de soudage et/ou un dispositif d'information (24).

2. Appareil de soudage électrique selon la revendication 1, caractérisé par une sonde de température ambiante (5), ainsi qu'un calculateur (6), recevant du détecteur, par l'intermédiaire du convertisseur, les données de consigne normées de travail de soudage du raccord (1), et délivrant des signaux d'un travail de consigne de soudage, corrigé en fonction de la température, dans l'entrée (7) du régulateur (8).

3. Appareil de soudage électrique selon la revendication 1, caractérisé en ce qu'au moins l'un des circuits de commutation (9 10) intégrés est relié au calculateur (11) définissent la puissance de soudage, élément de mesure de valeur effective de la tension de soudage et du courant de soudage.

4. Appareil de soudage électrique selon l'une des revendications 1 à 3, caractérisé en ce que le détecteur (3) des données de raccord saisit, par l'intermédiaire du convertisseur (4), des données concemant la résistance de consigne, rapportée à la température, du raccord (1), ainsi qu'un facteur de température de la résistance et les stocke dans une mémoire (29), en ce qu'un dispositif de correction et de comparaison (18), relié à la sonde de température ambiante (5), est relié à la mémoire de stockage ainsi qu'à un circuit de mesure de résistance (27) raccordé au raccord (1), effectue la comparaison entre la résistance réelle ainsi mesurée et la résistance de consigne convertie à la température ambiante et déclenche le dispositif de blocage (14) en cas d'écart dépassant les valeurs limites.

5. Appareil de soudage électrique selon la revendication 1, caractérisé en ce que des données de raccord contiennent des limites pour la tension de soudage et en ce qu'est prévu un dispositif de surveillance de tension (22), effectuant la comparaison entre les limites de la tension de soudage et de la tension réelle de soudage et déclenchant le dispositif de blocage (14) en cas de franchissement en montée ou en descente des limites.

6. Appareil de soudage électrique selon la revendication 1 ou 5, caractérisé en ce que des mémoires (X₃, X₄) destinées à des données limites de tension d'entrée ainsi que de sa fréquence sont raccordées à un dispositif de surveillance de tension d'entrée (19), respectivement à un dispositif de surveillance de fréquence (20), effectuant la comparaison entre les données limites et les données réelles de tension d'entrée et de sa fréquence et déclenchant le dispositif de blocage (14) en cas de franchissement en montée ou en descente des données limites.

7. Appareil de soudage électrique selon l'une des revendications 1, 2, 4, 5, caractérisé en ce que le détecteur (3) forme avec le convertisseur (4) un ensemble de construction explorant les données appliquées sur le raccord, sous forme d'un code-barres.
